Europäisches Patentamt

European Patent Office

Office européen des brevets

(11) Numéro de publication: **0 245 180 B1**

# FASCICULE DE BREVET EUROPEEN

(45) Date de publication de fascicule du brevet: **30.12.92** (51) Int. Cl.5: **B28C 5/00**, B28C 5/12

(21) Numéro de dépôt: **87401043.2**

(22) Date de dépôt: **07.05.87**

(54) **Procédé de fabrication de murs en pisés ou terre stabilisée, machine à projeter adaptée à sa mise en oeuvre et mur ainsi obtenu.**

(30) Priorité: **07.05.86 FR 860620**

(43) Date de publication de la demande:
**11.11.87 Bulletin 87/46**

(45) Mention de la délivrance du brevet:
**30.12.92 Bulletin 92/53**

(84) Etats contractants désignés:
**AT BE CH DE ES FR GB GR IT LI LU NL SE**

(56) Documents cités:
EP-A- 0 150 353     AT-B- 378 173
DE-A- 2 305 118     FR-A- 1 170 308
FR-A- 2 006 157     FR-A- 2 347 166
GB-A- 792 557     OA-A- 6 174
US-A- 3 026 094     US-E- 20 440

(73) Titulaire: **Gilles, Pierre**
**40, rue Edouard Vaillant**
**F-93170 BAGNOLET(FR)**

(72) Inventeur: **Gilles, Pierre**
**40, rue Edouard Vaillant**
**F-93170 BAGNOLET(FR)**

(74) Mandataire: **Rinuy, Santarelli**
**14, avenue de la Grande Armée**
**F-75017 Paris(FR)**

Rank Xerox (UK) Business Services

## Description

La présente invention concerne un procédé de construction de murs en mortier à base de terre et de sable avec un faible apport en liants, mélanges généralement désignés sous l'appellation de pisés, une machine à projeter spécifiquement adaptée à la mise en oeuvre de ce procédé et un mur ainsi obtenu.

Les pisés trouvent notamment application dans le domaine des Bâtiments et Travaux Publics :
- construction de murs de bâtiments à usage divers, de murs de maisons d'habitation et de murs de clôture,
- réhabilitation de façade de maisons anciennes construites à base de terre (pisés, torchis, bauge, briques crues, etc...)
- parement de toutes façades de bâtiments ou de murs de clôture réalisés de manière traditionnelle (agglos creux, voile de béton, briques diverses),
- exécution de talus et remblais divers en terre.

D'autres applications de mélange terre/sable à base de latérite sont données par le document OA-A-6174 (briques et carrelage) avec une mise en oeuvre par compactage ou vibrage.

Les "pisés" sont des mortiers à base de terre souvent argileuse et de sable mélangés en proportions variables selon la nature de la terre, avec un apport en liants déterminé en fonction du poids sec en agrégats initiaux (terre + sable) et un apport en eau.

Ces mortiers sont ensuite classiquement mis en place entre deux banches parallèles et dammés à la main avec un pisoir, d'où un temps élevé de mise en oeuvre et une résultante sur les coûts qui explique la quasi disparition de cette technique depuis 1945.

D'autres variantes à base de terre stabilisée ont aussi été proposées, qui exigent la confection de briques crues à la presse, puis une mise en place classique de ces briques, ceci entraînant des coûts de main-d'oeuvre très semblables à ceux du parpaing de béton (agglos creux).

On connaît déjà des machines adaptées à projeter des compositions de mortier par "voie" dite "humide" (mortier recevant son apport en eau définitif avant le passage dans la machine), par exemple sur le principe de la pompe dite "MOINEAU" (rotor en acier en forme de "queue de cochon" tournant dans un stator en produit souple de type caoutchouté, ou produit similaire, gainant la face intérieure d'un conduit tubulaire en acier ou en fonte). Ces machines à projeter comportent souvent un système de transmission hydraulique permettant une inversion facile et rapide du sens de rotation de toutes les pièces mobiles (notamment trémie, pompe). Ceci est le cas entre autres de la machine PRECIJET H 3000 de MIXJET FRANCE, de la machine MF 80 HY de MOSSMER, et de la PI3 de PUTZMEISTER, mais ces machines ne fonctionnent convenablement qu'avec des microbétons à forte teneur en liants (de l'ordre de 20 % à 30 %) et très fluides. Ces types de mortiers ne permettent que des applications en couches minces successives de l'ordre de 0,5 cm à 2 centimètres, et ne se prêtent donc en fait qu'à la réalisation de parements de façades ou de voiles de béton extra minces sur supports grillagés de type "STUCANET" ou "NERGALIO".

On connaît également, de par le document DE-A-2.305.118, une machine adaptée à la projection d'un enduit léger à forte teneur en matériau isolant.

Les divers modèles de machines à projeter existant sur le marché ne sont pas exploitables techniquement, et a fortiori commercialement, du fait de nombreux incidents de fonctionnement, pour la projection de mortiers à pisés à plus faible teneur en liants et en eau, pourtant apparus nécessaires pour la confection de murs pleins épais (couches de plus de 5 centimètres d'épaisseur mises en place en une seule passe sur un fond support mobile léger type banche à une face).

De tels mortiers à faibles apports en liants et en eau provoquent en effet avec les machines actuelles la formation rapide d'un tunnel d'air, au niveau du mélange du mortier à pisé en attente dans la cuve d'alimentation de la machine autour et au-dessus de la trémie d'alimentation, ce qui engendre le désamorçage fréquent de la pompe à mortier et la nécessité de vidanger totalement la cuve d'alimentation pour "casser" la voûte de mortier surplombant la trémie ..., ceci entraînant la perte complète de la gâchée en cours et générant une perte de temps considérable.

D'autre part la faible teneur en liants entraîne une ségrégation rapide d'une partie du sable du mélange de mortier en pisé en attente statique dans la cuve d'alimentation du corps principal de la machine ; ce sable s'accumule alors en bouchons non élastiques aux angles morts de la cuve d'alimentation et en particulier à l'entrée de l'orifice d'alimentation de la pompe mortier ceci provoquant une autre cause de désamorçage de la pompe, et même le risque de blocage total de toute la machine, d'où nouvelle obligation de vidanger la cuve d'alimentation pour pouvoir curer les abords de l'orifice d'alimentation de la pompe.

Enfin en cas de retard dans l'exécution de la projection du mélange de mortier en attente statique dans la cuve d'alimentation, il se produit un essorage de l'eau du mélange et un début de prise du mortier aggravant encore l'effet de voûte et de tunnel d'air autour de la trémie d'alimentation, en particulier avec les cuves en forme de "V" qui sont actuellement utilisées.

L'invention a pour objet de pallier ces inconvénients.

Elle part de la constatation que la qualité finale et la bonne tenue dans le temps de murs en pisés du type précité, qui suppose l'élimination des phénomènes de retrait et de fissuration, implique le respect imperatif d'une fourchette de dosages qui ne convient absolument pas aux machines à projeter existant actuellement sur le marché.

Des essais effectués par le déposant ont en effet révélé qu'il convient de retenir, pour la fabrication de tels murs en pisés, des dosages correspondant, selon l'activité argileuse de la terre utilisée, à un pourcentage en agrégats secs incluant de 15 à 50 % de terre et de 50 à 85 % de sable; à cela il faut ajouter, pour permettre une fabrication par projection en une seule passe, un faible apport en liants inférieur à 10 % (de préférence voisin de 7,5 %) - souvent réparti à raison de deux tiers de chaux hydraulique pour un tiers de ciment - calculé sur le poids total sec en agrégats (terre + sable); la teneur en eau totale du mortier à projeter doit être inférieure à 22. % (de préférence 20 %) du poids total de l'ensemble des produits secs (terre + sable + liants).

La présente invention a donc pour objet de solutionner les problèmes évoqués ci-dessus, qui sont inhérents aux machines à projeter par voie humide fonctionnant sur le principe des pompes à mortier et prévues jusqu'à maintenant pour les seuls microbétons fluides, en apportant une série de modifications indispensables et complémentaires à la conception actuelle de ces machines pour les rendre aptes à la projection de mortiers visqueux à faible teneur en liant, soit moins de 10 %, et en particulier pour les mortiers à pisés.

L'invention propose à cet effet un procédé de fabrication de murs en mortiers terre/sable, caractérisé en ce que :

. on constitue un mélange contenant entre 15 et 30 % de terre et 85 % et 50 % de sable, auquel on ajoute un apport en liants représentant au plus 10 % du poids sec en agrégats (terre + sable) ainsi que de l'eau représentant au plus 22 % du poids total sec (terre + sable + liants),

. on brasse en permanence cette masse dans son ensemble jusqu'à l'amener à force à l'entrée d'une pompe,

. on pompe cette masse et on la projette contre un support de projection.

Conformément à ce procédé on génère donc une gestion dynamique globale et continue de l'ensemble des fluides (à savoir tous les composants nécessaires aux mortiers, eau y compris) en attente de projection dans la cuve d'alimentation du corps principal de la machine. Cet objectif et obtenu dans une machine à projeter conforme à l'invention :

a) Grâce à une nouvelle conception de la forme de l'enveloppe extérieure de la cuve d'alimentation en ajustant sa "carrosserie" au plus prés de l'ensemble des pièces mobiles intérieures afin d'éliminer les angles morts de brassage.

b) Grâce à la mise en oeuvre d'un système global de malaxage permanent composé d'une batterie de deux malaxeurs contra rotatifs (deux ou plus, mais par économie on se limitera de préférence à deux malaxeurs) à axes paralléles horizontaux et à aires de balayage imbriquées (aux trois quarts de préférence), cet ensemble étant lui-même placé juste au-dessus de la trémie d'alimentation et au plus près de l'aire de balayage de celle-ci. Ce dispositif permet d'éliminer définitivement le risque de formation d'un tunnel d'air au-dessus et autour de la trémie d'alimentation du fait des mouvements erratiques du mortier en agitation permanente, ces effets erratiques pouvant être renforcés par la faculté d'inverser instantanément et à tout moment le sens de rotation de la batterie de malaxeurs du fait de la souplesse de la transmission hydraulique.

c) Dans le même esprit la trémie d'alimentation, à pales tronquées ou à vis sans fin, fonctionne dans un conduit de tôle semi-tubulaire ajusté au plus près de l'aire de balayage de la trémie et placé directement sous toute la longueur de la cuve d'alimentation et la batterie de malaxeurs. Ce conduit semi-tubulaire gaine les "deux tiers partie basse" de l'aire de balayage de la trémie d'alimentation tout en laissant totalement libre le "un tiers partie haute" directement ouvert sur la cuve d'alimentation et la batterie de malaxeurs.

De façon synthétique l'invention propose donc une machine à projeter des mortiers adaptée à la mise en oeuvre du procédé, du genre comportant une cuve d'alimentation, une trémie d'alimentation au fond de la cuve, une pompe disposée dans le prolongement de la trémie et alimentée en continu par celle-ci, et une lance de projection raccordée à cette pompe par un tuyau souple, caractérisée en ce que dans la cuve sont disposés des moyens de brassage permanent comportant au moins deux malaxeurs contrarotatifs à axes parallèles à l'axe de la trémie et à volumes de balayage imbriqués, adjacents au volume balayé par la trémie, la cuve ayant une enveloppe épousant, au moins au-dessous du niveau des axes des malaxeurs, les contours de ces volumes balayés par ces malaxeurs et cette trémie et en ce que sur cette cuve est monté basculant un dispositif extérieur de malaxage destiné à la préparation des mortiers et comportant une enveloppe semi-tubulaire ouverte et contenant un malaxeur.

L'ensemble de ce dispositif assure efficacement le brassage total et permanent du mortier entre la cuve d'alimentation et la trémie, évitant ainsi la ségrégation du sable, l'essorage de l'eau, la prise intempestive du mortier et surtout le risque de tunnel d'air.

En fait, l'implantation des deux malaxeurs contrarotatifs à proximité immédiate de la trémie d'alimentation et la forme particulière de la cuve d'alimentation étaient en soi connues dans un autre domaine d'après le document FR-A-1.170.308, qui décrit un pétrisseur-malaxeur adapté à fournir des produits complètement façonnés, à partir de masses pâteuses pétrissables (argiles de toutes espèces, couleurs à tritures ...). Le produit est amené par charges successives qui sont traitées une par une : la vis sans fin tourne d'abord dans un sens en sorte de refouler le produit à pétrir vers les bras pétrisseurs puis dans l'autre sens pour refouler et mouler le produit flétri, en tirant parti de la formation de bouchons de produits. Il n'y a pas le moindre notion de projection ni le moindre usage de sable ou graviers dans les produits à pétrir.

Selon une disposition préférée de l'invention une pièce totalement originale du type "sas" est intercalée à la suite de la trémie d'alimentation et juste avant la pompe (de préférence à piston, ou de type "MOINEAU" ou autres) ; celle-ci permet d'assurer deux fonctions complémentaires déterminantes pour la mise en oeuvre de mortiers à faibles teneurs en liants et en eau en évitant tout risque de blocage de la machine ou de la pompe par des bouchons de sable résultant de la ségrégation partielle du mortier :

a) Ce "sas", saillant du corps principal de la machine et placé dans l'alignement direct de la gaine semi-tubulaire de la trémie d'alimentation sans aucun angle mort ni solution de continuité pour la veine des fluides en cours de transit, prend avantageusement la forme d'une gaine de tôle ou de fonte entièrement tubulaire ajustée tout autour de l'aire de balayage du prolongement de la trémie et assure ainsi la fonction de couloir de forçage du mortier jusqu'à la pompe.

b) Simultanément ce "sas" assure la fonction de chambre de décompression et de curage pour les sables résultant d'une ségrégation éventuelle et ayant tendance à s'agglomérer malgré tout à l'orifice d'alimentation de la pompe. Pour cela le "sas" comporte de préférence au moins une porte de visite, du genre capot mobile ; il y a avantageusement deux portes de visite placées en opposition de part et d'autre du "sas" avec ouverture verticale ou latérale au choix, aux fins de curage rapide des bouchons de sable.

L'ensemble des dispositions précitées se combine avantageusement pour constituer un tout complémentaire pour la projection de mortiers pauvres en liants et en eau, en particulier pour les pisés.

Ces modifications pourront être apportées sans grandes difficultés à l'ensemble des machines à projeter qui sortent des ateliers des divers fabricants; en effet ces modifications n'engendrent aucune gêne pour une utilisation classique avec les microbétons fluides.

L'invention propose également un mur en mortier terre/sable, caractérisé en ce qu'il comporte de la terre et du sable dans des proportions complémentaires en poids sec comprises entre 15 et 50 % de terre et 85 à 50 % de sable et moins de 10 % en liants par rapport au poids sec d'agrégats (terre-sable) et en ce qu'il est maintenu par un cadre d'ossature muni sur au moins une de ses faces d'une paroi grillagée.

Selon des dispositions additionnelles préférées de l'invention :
- les proportions préférées en cas de craie et/ou de limons argileux sont de 80 % de sable pour 20 % de terre,
- les proportions préférées en cas de latérites et bauxites sont de 65 % de sable pour 35 % de terre,
- les proportions les plus courantes sont comprises entre 15 et 35 % de terre et 85 et 65 % de sable.
- la projection se fait avantageusement à l'aide d'une lance comportant une chambre, à profil en tuyère, pour une injection annulaire d'air comprimé autour du mortier amené sous pression par la pompe jusqu'à la lance.
- les murs en pisés sont avantageusement maintenus par des parois grillagées, le plus souvent noyées, de préférence assujetties à un cadre d'ossature de rigidification, éventuellement traversé par des réseaux de renforcement, le tout constituant avec le grillage un caisson de projection.

Des objets, caractéristiques et avantages de l'invention ressortent de la description qui suit, donnée à titre d'exemple non limitatif, en regard des dessins annexés sur lesquels :
- la figure 1 est une vue schématique en coupe transversale d'une machine à projeter conforme à l'invention;
- la figure 2 en est une vue schématique en coupe axiale verticale selon la ligne II-II;
- la figure 3 est une vue de détail montrant en perspective un sas dont les portes de visite sont ouvertes;
- la figure 4 est une vue schématique de dessus, avec arrachements partiels de la machine à projeter des figures 1 et 2;
- la figure 5 est une vue en perspective d'un caisson destiné à la fabrication d'un mur en pisés;
- les figures 6A à 6E montrent des phases successives de fabrication d'un mur en pisés depuis la pose du caisson vide de la figure 5 jusqu'à sa finition ; et

- la figure 7 est une vue schématique en coupe axiale d'une lance de projection selon l'invention.

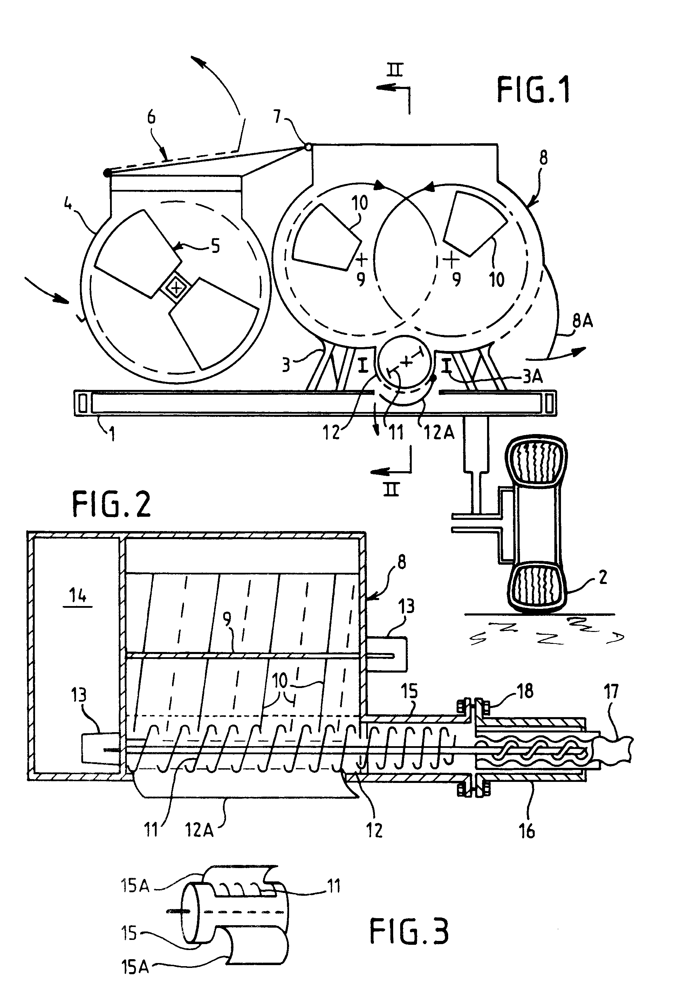

La machine à projeter représentée à titre d'exemple aux figures 1 à 4 complétées par la figure 7 permet la constitution d'un mélange terre-sable à faible teneur en liants et en eau, le brassage permanent de cette masse et son amenée à force à l'entrée d'une pompe, ici de type MOINEAU, et enfin sa projection contre tout support approprié, fixe ou amovible.

L'ensemble de la machine est ici porté par un châssis-support 1 réalisé au gabarit routier et reposant sur un train de roulement 2 au même gabarit, dont une partie seulement est représentée à la figure 1. La machine est munie d'organes 3 de fixation au châssis 1 et de renforts structurels de solidarisation 3A entre la cuve et le sas (voir ci-après).

La machine à projeter comporte un corps principal, doté d'une pompe à mortier, autour duquel sont disposés des éléments accessoires.

Un complexe de malaxage extérieur est disposé à côté du corps principal de la machine et vise à la préparation et au dosage des mortiers. Ce complexe se décompose en une enveloppe de malaxeur 4 en tôle d'acier épaisse de forme semi-tubulaire ouverte vers le haut et dans laquelle tourne un malaxeur 5 à axe horizontal entraîné par un moteur hydraulique 13 alimenté en énergie par un ensemble 14 renfermant une pompe hydraulique centrale entraînée par un moteur thermique (non représentés) et permettant d'inverser à volonté le sens du malaxage.

Au-dessus de l'ouverture du malaxeur est disposé un tamis basculant 6 de criblage et de calibrage des divers agrégats destinés à composer le mortier. Ce tamis, à mailles déterminées en fonction des capacités d'absorption de graviers par la pompe MOINEAU 16 de la machine peut être à entraînement mécanique si les débits exigés sont importants.

Une articulation horizontale 7 assure une solidarisation entre le malaxeur et le corps principal de la machine et permet le basculement du malaxeur (poussé par un vérin hydraulique non représenté) aux fins d'alimentation de la machine; en général le tamis est au préalable basculé sur le côté de l'enveloppe du malaxeur (voir les flèches) afin de libérer l'écoulement du mortier visqueux vers la cuve d'alimentation du corps principal de la machine.

Après cette phase d'alimentation le malaxeur puis le tamis reprennent leurs positions initiales afin de permettre la préparation d'une nouvelle gâchée pendant la projection de la gâchée qui vient d'être versée dans le corps principal.

Sur l'arrière du châssis prend place l'ensemble (moteur thermique/pompe centrale hydraulique) 14 fournissant la puissance nécessaire aux divers moteurs d'entraînement hydrauliques 13.

Le corps principal comporte une cuve d'alimentation 8 dont l'enveloppe ou la carrosserie, par exemple réalisée en tôle d'acier épaisse, est modelée au plus près des aires de balayage des diverses parties mobiles. Cette cuve comporte de préférence une trappe latérale 8A de visite et de vidange de la cuve d'alimentation, destinée en particulier à faciliter le nettoyage de la cuve après usage. A l'intérieur de cette cuve et balayant la totalité de l'espace intérieur se trouve une batterie de deux malaxeurs contrarotatifs à axes horizontaux et parallèles 9 et à pales 10 dont les aires de balayage sont imbriquées, environ pour les trois quarts de préférence.

En-dessous de cette batterie de malaxeurs horizontaux est placé une trémie d'alimentation 11 à pales tronquées (ou éventuellement à vis sans fin) logée aux deux tiers dans une gaine semi-tubulaire en tôle d'acier 12 faisant partie intégrante de l'enveloppe de la cuve d'alimentation, et constituant avec celle-ci le corps principal de la machine. Cette gaine dispose à sa partie basse d'une trappe de vidange 12A destinée au nettoyage de la machine. L'aire de balayage de la trémie 11 sera placée au voisinage le plus proche de l'aire de balayage des pales 10 de la batterie de malaxeurs horizontaux en laissant juste l'espacement libre nécessaire pour éviter le blocage par des graviers.

Dans le prolongement direct de cette gaine semi-tubulaire 12 est placé, faisant saillie hors du corps principal de la machine, un sas 15 en forme de gaine entièrement tubulaire enveloppant dans sa totalité l'aire de balayage de la trémie 11 qui sera prolongée de la longueur de la gaine. Cette gaine, en tôle d'acier renforcée, et la prolongation de la trémie forment conjointement un conduit d'alimentation forcée de la pompe à mortier 16; il faudra seulement veiller à modeler la veine de ce conduit afin d'obtenir un débit de fluides équivalent aux capacités d'absorption de la pompe à mortier afin de ne pas recréer le problème des bouchons de sable en amont à l'entrée du sas.

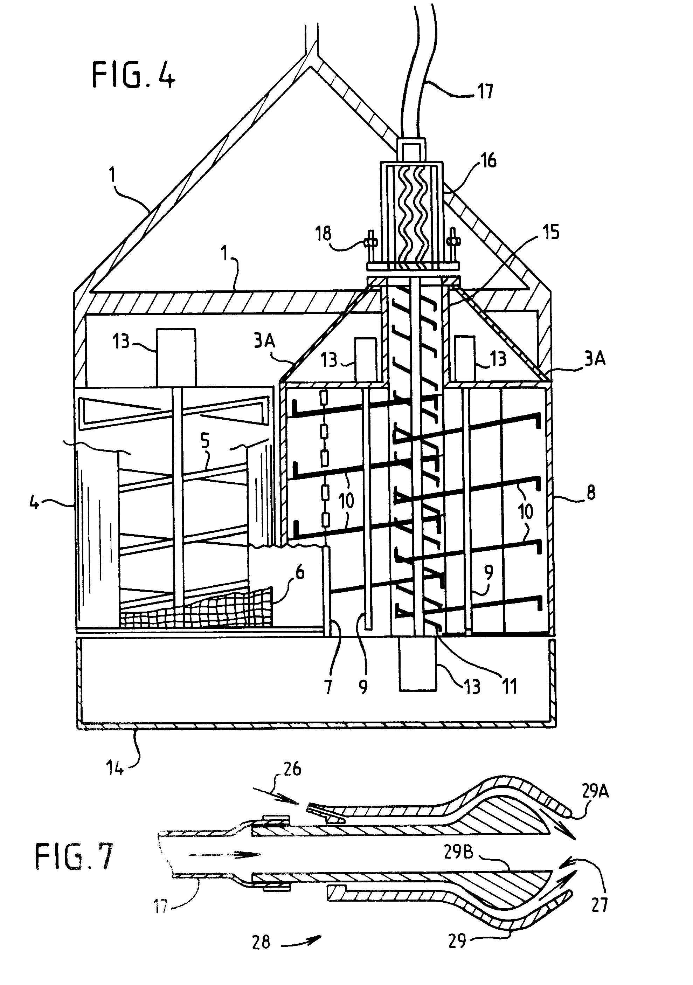

Des ferrures de renfort 3A (voir figures 1 et 4) sont prévues pour rigidifier l'ensemble corps principal de la machine et sas, en fonction de la puissance de la machine.

Ce sas comporte par ailleurs des portes de visite mobiles (du type capot) à ouvertures hautes et basses 15A afin d'assurer la possibilité de désengorgement et de décompression du conduit par simple curage direct à la truelle, ceci dans l'éventualité désormais restreinte de la formation d'un bouchon de sable à l'entrée de la pompe à mortier.

Une variante avec ouvertures latérales peut aussi être envisagée mais le curage sera plus lent. La pompe, ici de type MOINEAU, de taille déterminée selon les exigences de débit formulées, est boulonnée en couronne 18 sur une bride du sas et dans le prolongement de celui-ci. L'entraînement du rotor de la pompe MOINEAU est assuré par l'axe de la trémie grâce à un cardan (non représenté) afin de permettre le libre jeu du rotor en acier dans le stator en produit souple, ce qui est le principe de base de la pompe MOINEAU. La sortie des fluides mis sous pression dans la pompe MOINEAU se fait à l'autre extrémité dans un tuyau souple 17 destiné au transport du mortier jusqu'à la lance de projection de la figure 7.

Les lances de projection classiques pour microbétons fonctionnent sur le principe de la compression du boudin de mortier (squeeze bore) avant sa pulvérisation par une veine d'air centrale injectée dans une chambre de détente grâce à un conduit rigide traversant le boudin de mortier. Cette solution ne donne pas entière satisfaction dans le cas de l'invention présente du fait de l'existence de nombreux graviers ayant tendance à se coïncer et à s'accumuler autour du conduit rigide d'air, dans la chambre, et entraînant le risque de formation de bouchon de mortiers et de graviers dans la lance. Il est donc préféré selon l'invention une lance 28 ne comprimant pas le boudin de mortier et injectant l'air comprimé 26 nécessaire à la pulvérisation de ce mortier par une couronne d'injection périphérique focalisant les jets d'air comprimé de façon concentrique dans une chambre d'expansion 27, en forme de tuyère de fusée. Un embout (amovible) de projection 29A, placé dans la prolongation de la gaine extérieure 29 de la tuyère (cette gaine est ici mobile le long du corps 29B de la lance), permet de limiter la dispersion du mortier pulvérisé en fonction de la fluidité du mélange de mortier utilisé, par action sur la taille de la section de sortie de la tuyère ; il est avantageusement prévu sur cette lance un organe de télécommande de débit de la pompe à mortier 16.

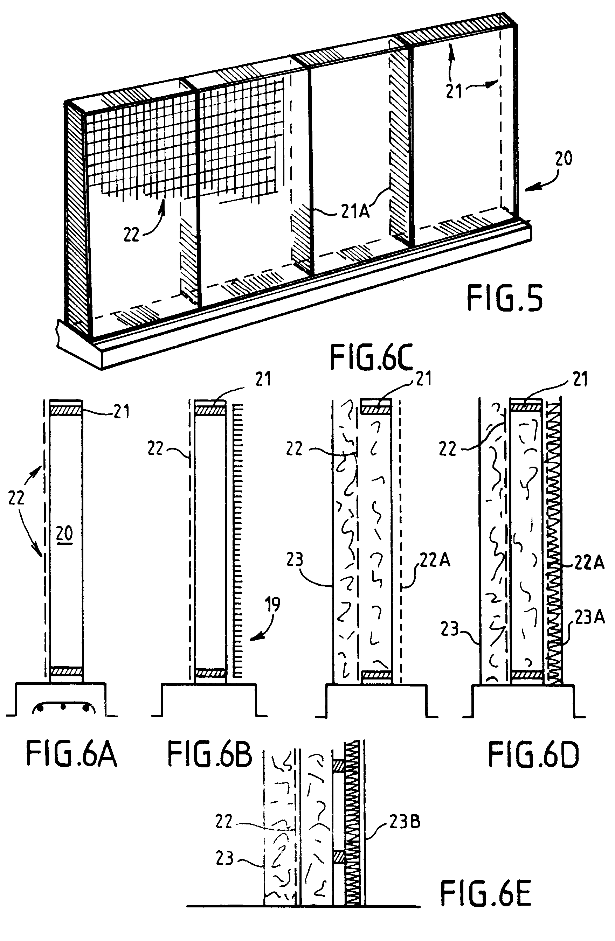

La figure 5 représente une ossature destinée à être intégrée dans la masse d'un mur en pisé sous forme de caisson préfabriqué perdu 20 permettant d'éliminer le double banchage habituel grâce à une conception simple assurant l'accrochage de couches épaisses (plus de 5 cm jusqu'à 30 cm voire plus) mises en place en une seule passe; ce caisson participe ensuite à la résistance du mur à l'écrasement comme à l'arrachement. Ce caisson simple est ici composé d'un cadre 21 en chevrons de bois renforcé de chevrons verticaux 21A, sur lequel on cloue en face extérieure un grillage plastifié 22 qui contribue à réduire les risques de fluage du mortier pendant le séchage. Ces caissons sont préfabriqués selon des modules variables mais manuportables et peuvent comporter des portes et fenêtres mises en place à l'avance en atelier. La face intérieure de ce caisson assure le support de la projection soit par la mise en place rapide d'une banche mobile légère récupérable 19 (figure 6B), soit par la présence d'une feuille de carton consommable agrafée sur les chevrons de bois. La projection se poursuit sur une épaisseur 23 (figure 6C) au moins égale à celle du caisson (de préférence le double) avec noyage dans la masse du grillage plastifié 22.

Ultérieurement ce caisson reste intégré à la masse du mur et contribue à la résistance du panneau de mur comme avec une ossature classique en bois.

Une couche de finition intérieure 23A peut être rapportée sur un grillage 22A fixé sur le caisson et/ou le mur (voir les figures 6C et 6D). En variante représentée à la figure 6E, le parement interne 23A est remplacé par un doublage isolant intérieur 238.

Une variante de ce type de caisson avec ossature métallique peut être envisagée et sera caractérisée par le remplacement des chevrons de bois par des raidisseurs métalliques servant au contreventement d'un cadre en profilés métalliques. Dans ce cas le grillage ne sera pas absolument nécessaire, les raidisseurs assurant la tenue du mortier.

Il va de soi que la description qui précède n'a été proposée qu'à titre illustratif et que de nombreuses variantes peuvent être proposées par l'homme de l'art sans sortir du cadre de l'invention déterminé par le contenu des revendications, en particulier par l'utilisation des divers principes de pompe à mortier existant dans le domaine public. On recommandera plus spécialement les divers modèles de pompe à piston lorsqu'une pression importante sera exigée pour l'acheminement du mortier hors de la machine.

## Revendications

1. Procédé de fabrication de murs en mortiers terre/sable, caractérisé en ce que :
   . on constitue un mélange contenant entre 15 et 50 % de terre et 85 % et 50 % de sable, auquel on ajoute un apport en liants représentant au plus 10 % du poids sec en agrégats (terre + sable) ainsi que de l'eau représentant au plus 22 % du poids total sec (terre + sable + liants),
   . on brasse en permanence cette masse dans son ensemble jusqu'à l'amener à force à l'entrée d'une pompe (16),
   . on pompe cette masse et on la projette contre un support de projection (19).

2. Procédé selon la revendication 1, caractérisé en ce que l'on projette cette masse dans un caisson comportant un cadre d'ossature (21) muni sur au moins une de ses faces d'une paroi grillagée (22).

3. Procédé selon la revendication 1 ou la revendication 2, caractérisé en ce que le support de projection est une paroi amovible que l'on retire après prise du mortier.

4. Procédé selon l'une quelconque des revendications 1 à 3, caractérisé en ce que la teneur totale en eau est de 20 % environ du poids total sec pour un apport de liants de 7,5 % environ du poids sec en agrégats (terre + sable).

5. Procédé selon l'une quelconque des revendications 1 à 4, caractérisé en ce que le mélange contient entre 15 et 35 % de terre et 85 et 65 % de sable selon l'activité argileuse de la terre.

6. Machine à projeter des mortiers adaptée à la mise en oeuvre du procédé selon l'une quelconque des revendications 1 à 5, du genre comportant une cuve d'alimentation (8), une trémie d'alimentation (11) au fond de la cuve, une pompe (16) disposée dans le prolongement de la trémie et alimentée en continu par celle-ci, et une lance de projection (28) raccordée à cette pompe par un tuyau souple (17), caractérisée en ce que dans la cuve sont disposés des moyens de brassage permanent comportant au moins deux malaxeurs (9, 10) contrarotatifs à axes parallèles à l'axe de la trémie (11) et à volumes de balayage imbriqués, adjacents au volume balayé par la trémie, la cuve ayant une enveloppe épousant, au moins au-dessous du niveau des axes des malaxeurs, les contours de ces volumes balayés par ces malaxeurs et cette trémie et en ce que sur cette cuve est monté basculant un dispositif extérieur de malaxage (4, 5) destiné à la préparation des mortiers et comportant une enveloppe (4) semi-tubulaire ouverte et contenant un malaxeur.

7. Machine selon la revendication 6, caractérisée en ce qu'une pièce (15) formant sas et couloir de forçage est intercalée entre la cuve d'alimentation et la pompe.

8. Machine selon la revendication 7, caractérisée en ce que au moins une porte d'accès est ménagée sur la pièce formant sas.

9. Machine selon l'une quelconque des revendications 6 à 8 caractérisée en ce que la lance (28) comporte une couronne d'injection périphérique (29 - 29B) focalisant les jets d'air comprimé de façon concentrique dans une chambre d'expansion (27) en forme de tuyère de fusée dont la taille de l'orifice de sortie peut être modulée par un embout amovible (29A).

10. Mur en mortier terre/sable adapté à être réalisé d'après le procédé selon l'une quelconque des revendications 1 à 5, caractérisé en ce qu'il comporte de la terre et du sable dans des proportions complémentaires en poids sec comprises entre 15 et 50 % de terre et 85 et 50 % de sable et moins de 10 % en liants par rapport au poids sec d'agrégats (terre-sable) et en ce qu'il est maintenu par un caisson comportant un cadre d'ossature (21) muni sur au moins une de ses faces d'une paroi grillagée (22).

11. Mur selon la revendication 10, caractérisé en ce qu'il comprend de la terre et du sable dans des proportions complémentaires compris entre 15 et 35 % de terre et 85 et 65 % de sable, et 7,5 % d'apport en liants.

**Claims**

1. A process for the production of earth/sand mortar walls, characterized in that
   a mixture is prepared containing between 15 and 50% earth and 85 and 50% sand, to which a quantity of binders representing at the most 10% of the dry weight in aggregates (earth + sand) and also water representing at the most 22% of the total dry weight (earth + sand + binders) are added,
   this whole body is continuously mixed until it is forced into the intake of a pump (16),
   said body is pumped and sprayed against a spraying support (19).

2. A process according to claim 1, characterized in that said body is sprayed into a caisson comprising a skeleton frame (21) at least one of whose faces has a grid wall (22).

3. A process according to claim 1 or 2, characterized in that the spraying support is a detachable wall which is withdrawn after the mortar has set.

4. A process according to any of claims 1 to 3, characterized in that the total quantity of water is approximately 20% of the total dry weight for an added quantity of binders of approximately 7.5% of the dry weight in aggregates (earth + sand).

5. A process according to any of claims 1 to 4, characterized in that the mixture contains between 15 and 35% earth and 85 and 65% sand in dependence on the argillaceous activity of the earth.

6. A machine for spraying mortars which is adapted to the performance of the process according to any of claims 1 to 5, of the kind comprising a supply tank (8), a supply hopper (11) at the base of the tank, a pump (16) disposed in the prolongation of the hopper and continuously supplied therefrom, and a spraying lance (28) connected to the pump via a flexible tube (17), characterized in that the tank contains continuous mixing machines comprising at least two contra-rotatory mixers (9, 10) having axes parallel with the axis of the hopper (11) and overlapping sweeping volumes which are close to the volume swept by the hopper, the tank having an envelope fitting closely, at least below the level of the axes of the mixers, around the contours of the volumes swept by the mixers and the hopper, and mounted tiltably on the tank is an external mixing device (4, 5) adapted to the preparation of the mortars and comprising a semi-tubular open element (4) containing a mixer (5).

7. A machine according to claim 6, characterized in that a member (15) forming an airlock and forcing corridor is incorporated between the supply tank and the pump.

8. A machine according to claim 7, characterized in that the member forming the airlock is formed with at least one access door.

9. A machine according to any of claims 6 to 8, characterized in that the lance (28) comprises a peripheral injection rim (29 - 29B) focusing the compressed air jets concentrically into a rocket-nozzle-shaped expansion chamber (27) the size of whose outlet aperture can be varied by a detachable tip (29A).

10. An earth/sand mortar wall adapted to be produced by the process according to any of claims 1 to 5, characterized in that it comprises earth and sand in complementary proportion by dry weight of between 15 and 50% earth and 85 and 50% sand and less than 10% binders in relation to the dry weight of aggregates (earth-sand), the wall being retained by a caisson comprising a skeleton frame (21) at least one of whose faces has a grid wall (22).

11. A wall according to claim 10, characterized in that it comprises earth and sand in complementary proportions of between 15 and 35% earth and 85 and 65% sand and 7.5% added binders.

**Patentansprüche**

1. Verfahren zum Herstellen von Mauern aus Lehm/Sand-Mörteln, dadurch gekennzeichnet
   - daß man eine zwischen 15% und 50% Erde und zwischen 85% und 50% Sand enthaltende Mischung herstellt, der man einen Bindemittelzusatz, der höchstens 10%, bezogen auf das Trockengewicht der Zuschlagsstoffe (Erde + Sand) ausmacht, sowie Wasser beigibt, das höchstens 22% des Gesamttrockengewichts (Erde + Sand + Bindemittel) darstellt,
   - daß man permanent die Masse in ihrer Gesamtheit umrührt, bis sie zu dem Eingang einer Pumpe (16) gepreßt wird, und
   - daß man die Masse durch Pumpen unter Druck setzt und gegen eine Spritzauflage (19) spritzt.

2. Verfahren nach Anspruch 1, dadurch gekennzeichnet, daß man diese Masse in einen Kasten spritzt, der einen Geripperahmen (21) aufweist, der mindestens an einer seiner Seiten mit einer Gitterwand (22) ausgerüstet ist.

3. Verfahren nach Anspruch 1 oder 2, dadurch gekennzeichnet, daß die Spritzauflage eine ablösbare Wand ist, die man nach dem Aushärten des Mörtels entfernt.

4. Verfahren nach einem der Ansprüche 1 bis 3, dadurch gekennzeichnet, daß der Gesamtwassergehalt etwa 20% des Gesamttrockengewichtes beträgt, bei einem Bindemittelzusatz von etwa 7,5%, bezogen auf das Trockengewicht der Zuschlagsstoffe (Erde + Sand).

5. Verfahren nach einem der Ansprüche 1 bis 4, dadurch gekennzeichnet, daß die Mischung je nach Tonhaltigkeit der Erde zwischen 15% und 35% Erde und zwischen 85% und 65% Sand enthält.

6. Mörtelspritzmaschine zur Durchführung des Verfahrens nach einem der Ansprüche 1 bis 5, mit einem Beschickungsbehälter (8), mit einem Beschickungskanal (11) am Behälterboden, mit einer Pumpe (16), die in Verlängerung des Beschickungskanals angeordnet ist und kontinuierlich von diesem beaufschlagt wird, und mit einem Spritzrohr (28), das an die Pumpe über einen biegsamen Schlauch (17) angeschlossen ist, dadurch gekennzeichnet, daß in dem Behälter Rührmittel zum permanenten Rühren angeordnet sind, die mindestens zwei gegenläufige Knetwerke (9, 10) aufweisen, deren Achsen parallel zur Achse des Beschikkungskanals (11) sind und die sich überlappende Arbeitsvolumen haben, die an das von dem Beschickungskanal überstrichene Volumen angrenzen, daß der Behälter einen Mantel aufweist, der sich mindestens unterhalb der Knetwerkachsen an die Konturen des von den Knetwerken und dem Beschickungskanal überstrichenen Volumen anschmiegt, und daß in dem Behälter eine kippbare äußere Kneteinrichtung (4, 5) angeordnet ist, die zur Zubereitung von Mörteln bestimmt ist und die einen Mantel (4) von der Form eines offenen Halbrohres aufweist und ein Knetwerk enthält.

7. Maschine nach Anspruch 6, dadurch gekennzeichnet, daß ein Stück (15) das einen Auspreßauslaß darstellt, zwischen den Beschickungsbehälter und die Pumpe eingefügt ist.

8. Maschine nach Anspruch 7, dadurch gekennzeichnet, daß mindestens eine Inspektionsklappe in dem Teil vorgesehen ist, das den Auslaß bildet.

9. Maschine nach einem Ansprüche 6 bis 8, dadurch gekennzeichnet, daß das Spritzrohr (28) eine periphere Injektionskrone (29 - 29B) aufweist, die die Druckluftströme konzentrisch in eine Expansionskammer (27) von der Form einer Raketendüse fokussiert, deren ausgangsseitige Öffnungskontur durch ein abnehmbares Übergangsrohrstück (29A) veränderbar ist.

10. Mauer aus Lehm/Sand-Mörtel, herstellbar nach einem Verfahren nach einem der Ansprüche 1 bis 5, dadurch gekennzeichnet, daß sie Erde und Sand in komplementären Trockengewichtsanteilen zwischen 15% und 50% Erde und zwischen 85% und 50% Sand und weniger als 10% Bindemittel, bezogen auf das Trockengewicht der Zuschlagsstoffe (Erde - Sand) aufweist, und daß sie durch einen Kasten gehalten wird, der einen Geripperahmen (21) aufweist, der an mindestens einer seiner Seiten mit einer Gitterwand (22) versehen ist.

11. Mauer nach Anspruch 10, dadurch gekennzeichnet, daß sie Erde und Sand in komplementären Anteilen zwischen 15% und 35% Erde und zwischen 85% und 65% Sand sowie 7,5% Bindemittelzusatz enthält.

# FIG.1

# FIG.2

# FIG.3

FIG.4

FIG.7

FIG.5

FIG.6C

FIG.6A    FIG.6B    FIG.6D

FIG.6E